(19) Europäisches Patentamt
European Patent Office
Office européen des brevets

(11) **EP 2 249 561 B1**

(12) **EUROPEAN PATENT SPECIFICATION**

(45) Date of publication and mention
of the grant of the patent:
**09.11.2011 Bulletin 2011/45**

(51) Int Cl.:
*H04N 5/74* $^{(2006.01)}$      *H04N 5/913* $^{(2006.01)}$
*H04N 9/31* $^{(2006.01)}$

(21) Application number: **09305407.0**

(22) Date of filing: **06.05.2009**

(54) **Anti-camcorder image display method using metamerism optimized for camcorders having different spectral responses**

Anti-Camcorder-Bildanzeigeverfahren unter Anwendung von Metamerismus, optimiert auf Camcorder mit unterschiedlichen Spektralantworten

Procédé d'affichage d'images anti-enregistrement utilisant un métamérisme optimisé pour caméscopes dotés de différentes réponses spectrales

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**10.11.2010 Bulletin 2010/45**

(73) Proprietor: **Thomson Licensing**
**92130 Issy-les-Moulineaux (FR)**

(72) Inventors:
• **Thiebaud, Sylvain**
**92648 BOULOGNE cedex (FR)**
• **Bourdon, Pascal**
**92648 BOULOGNE cedex (FR)**
• **Sacre, Jean-Jacques**
**92648 BOULOGNE cedex (FR)**

(74) Representative: **Ruellan-Lemonnier, Brigitte**
**Technicolor**
**1-5 rue Jeanne d'Arc**
**92130 Issy-les-Moulineaux (FR)**

(56) References cited:
EP-A- 2 009 918      EP-A- 2 059 039
US-A1- 2004 081 318      US-A1- 2006 152 524

## Description

Technical Field :

The invention relates to the jamming of images by metamerization that is adapted to prevent their illegal copy by a camcorder, notably in movie theaters.

Background Art

WO2004/040899, US2004/081318, EP1414250, US2006/H152524 disclose techniques of imperceptibly altering the spectrum of the colors of a displayed image in a manner that discourages copying the image by an image capture device as a camcorder. The image capture device has its specific spectral sensitivity that is generally different from the spectral sensitivity of the human eye. While the human eye has three different classes of colour photosensors (cone cells) that respond to light with different spectral response curves, while image capture devices typically use a two-dimensional array of light photosensors distributed over three different spectral response curves, the spectral response curves of the eye are generally different from the spectral response curves of the image capture devices. So, the technique disclosed in these documents is to use altering the spectrum of the colors of the displayed image in a way that does not change the perception of these colors by the human eye but that changes the perception of the same colors by the image capture device. According to this technique, the spectrum of at least a color is altered across the image and/or in time in a way that is metameric to the human eye but hopefully not metameric for the image capture device. These alterations of the spectra are not perceivable to the human eye when the images are displayed by projection on a screen but are perceivable to the human eye looking at a color monitor device displaying these images after they have been captured by a camcorder, as far as the camcorder has colour spectral response characteristics that are different from the colour spectral response characteristics of the human eye. Such alterations are preferably organized in jamming patterns inserted in the images such as to display on the color monitor device a message such as "Illegal Copy" that appears on copies made illegally in movie theatres by a camcorder, then annoying the illegal viewer. In the following description, colours having different spectrums that result in a approximately same colour perception by the human eye are referred to as metameric in the Human Visual System (HVS). As there are variations of the spectral response characteristics of the human eyes according to the age, the angle of view, and also according to individuals, slight difference of visual perception may exist for metameric colors. See for instance the new model based on the CIE 170-1: 2006.

Displaying colours that are metameric for the human eye is rendered possible by using n primary colours in a colour display device, with $n>3$. A colour projection device with three primary colours has not enough degrees of freedom to enable the display of different metameric colours. The use of at a least a fourth primary colour enables the display of at least some of the colours by a plurality of different spectrums. The images to display are generally coded according to a standard, as, for instance, the TV standard ITU-R BT.709, when the colors are expressed in the gamma-corrected Y'CbCr color space. After a known linear transformation into the so-called gamma-corrected R'G'B' color space (Y'Cb'Cr' -> R'G'B') and a gammatization transformation into the linear color space RGB (R'G'B'-> RGB), each pixel of the images to display is then assigned with a first set of three linear color components $C_R$, $C_G$, $C_B$ representing the color of this pixel in the device-dependant linear RGB color space.

On the side of a n-primary color display device, when inputting a set of n color components $C_1$, $C_2$, ..., $C_i$, ..., $C_n$ to control respectively the n primary colours of this n-primary display device ($n>3$), a spectrum $D(\lambda)$ is generated that represents the displayed color. There is a correspondence between any set of n color components $C_1$, $C_2$, ..., $C_i$, ..., $C_n$ and the displayed spectrum $D(\lambda)$. Such a correspondence defines a so-called forward color display transform { ($C_1$, $C_2$, ..., $C_i$, ..., $C_n$) -> $D(\lambda)$ }. Such a forward color display transform characterizes the image display device.

In order to display images by using this n-primary colour display device, the above first set of three color components $C_R$, $C_G$, $C_B$ representing a color of a pixel of an image to display should be transformed into a second set of n color components $C_1$, $C_2$, ..., $C_i$, ..., $C_n$ to control respectively the n primary colours of this n-primary display device in order to display this color according to a given spectrum $D(\lambda)$. In order to get different spectrums $D(\lambda)$, $D'(\lambda)$ for colors that are represented by approximately the same first set of three linear color components $C_R$, $C_G$, $C_B$ but are distributed over different pixels of an image to display, this transformation into a second set of n color components will be different if the pixel belongs or does not belong to the jamming pattern inserted in the image : a so-called "background" transformation will be performed if the pixel is out of the jamming pattern, a so-called "pattern" transformation, different from the "background" transformation, will be performed if the pixel is inside the jamming pattern. Therefore, a pixel outside the jamming pattern and another pixel inside the jamming pattern, even though they are represented by the same first set of three color components, will generally be represented by different sets of n color components, leading to different spectrums $D(\lambda)$, $D'(\lambda)$ giving different perception by a camcorder but the same perception by the human eye. The difference of perception by the camcorder will notably depend on the difference between the "background" transformation and the "pattern" transformation.

When viewing a given color displayed or monitored according to a spectrum $D(\lambda)$, the response of the human eye is characterized by a third set of three visual color components X, Y, Z which represents the displayed color in a visual color space. There is a known correspondence between any spectrum $D(\lambda)$ and the response of the human eye. This correspondence may be called a forward color visual perception transform. This visual color space can be the linear CIEXYZ color space, or the non-linear perceptually-uniform CIELAB color space, or the LMS color space based on the spectral sensitivity of the eye photosensors.

When capturing a given color displayed according to a spectrum $C(\lambda)$, an image capture device, as a camcorder, would generally output a fourth set of three output color components $F_R$, $F_G$, $F_B$. There is a correspondence between any spectrum $C(\lambda)$ and the outputted set. Such a correspondence defines a so-called forward color capture transform $\{ C(\lambda) \rightarrow (F_R, F_G, F_B)\}$. Such a forward color capture transform characterizes the image capture device with its spectral response characteristics.

Note that the word "spectrum" means the distribution of electromagnetic energy arranged in order of wavelengths.

Being given patterns inserted in images to display, being given a n-primary color display device and the spectral characteristics of its n primary colors, being given a "background" color transform and a "pattern" color transform to display images with a metameric effect using this n-primary color display device, being given the spectral sensitivity of a specific camcorder capturing these images as displayed, it is possible to evaluate the difference between colors as captured by the camcorder for pixels located outside the pattern and their corresponding paired metameric colors as captured by the camcorder for pixels located inside the pattern. At pages 22-23 of WO2006/076174, such a difference is evaluated by calculating a series of Euclidian distance $\Delta E$ between two sets of three visual color components L*, a*, b* expressed in the perceptually uniform CIELAB color space, these two sets corresponding to two respective sets of n components, one set being obtained by using the "background" color transform, the other set being obtained by using the "pattern" color transform.

In order to optimize the jamming of images, i.e. to have the inserted patterns the most visible on the images captured by a class of camcorder, it is advantageous to define the "background" color transform and the "pattern" color transform such that the above Euclidian distance $\Delta E$ is maximized for most of the pairs of metameric colors.

The "background" color transform and the "pattern" color transform depend on the spectral characteristics of the n primary colors of the color display device. Therefore, in order to optimize the jamming of images, it is also possible to adapt the spectral characteristics of these n primary colors.

But such an optimization, whatever the way it is obtained, will only work efficiently enough for a given class of camcorders having about the same spectral sensitivity. But it is not possible to optimize the definition of the "background" color transform and of the "pattern" color transform, and/or to optimize the definition of the spectral characteristics of the n primary colors for all classes of camcorders, whatever their spectral sensitivities are.

Summary of invention :

An object of the invention is notably to allow the optimization for a plurality of classes of image capture devices having different spectral sensitivities.

For this purpose, the subject of the invention is a method for displaying a series of images by controlling n primary colors $P_1$, $P_2$, ..., $P_i$, ..., $P_n$, of a color display device, wherein n > 3, comprising the following steps:

- inserting a pattern in each image of said series,
- for each pixel of said images assigned with a first set of three color components $D_R$, $D_G$, $D_B$ representing the color of said pixel, color transforming said first set of three linear color components $D_R$, $D_G$, $D_B$ into a second set of n linear color components $D_1$, $D_2$, ..., $D_i$, ..., $D_n$ adapted to control respectively the n primary colors $P_1$, $P_2$, ..., $P_i$, ..., $P_n$ in order to display said color, said color transforming being obtained by applying a so-called "background" color display transform $Tm\text{-}b_k$ if said pixel of an image is located outside of the pattern inserted in said image, said color transforming being obtained by applying a so-called "pattern" color display transform $Tm\text{-}p_j$ different from the "background" color display transform $Tm\text{-}b_k$ if said pixel of an image is located inside the pattern inserted in said image,
- displaying each pixel of said images by controlling the n primary colors $P_1$, $P_2$, ..., $P_i$, ..., $P_n$, with the second set of n linear color components $D_1$, $D_2$, ..., $D_i$, ..., $D_n$ obtained by said color transformation of the first set of three color components $D_R$, $D_G$, $D_B$ representing the color of said pixel,
  wherein the color that is displayed when using any second set of n linear color components $D_1$, $D_2$, ..., $D_i$, ..., $D_n$ that is obtained by applying the "background" color display transform to a first set of three color components $D_R$, $D_G$, $D_B$ is approximately metameric for the Human Visual System (HVS) with the color that is displayed when using any second set of n linear color components $D'_1$, $D'_2$, ..., $D'_i$, ..., $D'_n$ that is obtained by applying the "pattern" color display transform to the same first set of three color components $D_R$, $D_G$, $D_B$,

wherein said method comprises also one or both following selecting steps:

- selecting, among a plurality $Tm-p_1$, $Tm-p_2$, ..., $Tm-p_j$, ..., $Tm-p_q$ of different "pattern" color display transforms, said "pattern" color display transform to be applied to transform a first set of three linear color components $D_R$, $D_G$, $D_B$ assigned to a pixel of an image which is located inside the pattern inserted in said image ;

- selecting, among a plurality $Tm-b_1$, $Tm-b_2$, ..., $Tm-b_k$, ..., $Tm-b_r$ of different "background" color display transforms, said "background" color display transform to be applied to transform a first set of three linear color components $D_R$, $D_G$, $D_B$ assigned to a pixel of an image which is located outside the pattern inserted in said image ;

and wherein said method comprises also changing dynamically said selection(s) during the display of images of said series and/or within images of said series.

According to the invention, to display colors, different color transforms are then performed to get different pairs of metameric colours.

Thanks to the invention, by changing dynamically the selection of the "background" color display transform and/or of the "pattern" color display transform within displayed images and/or between different images to display, the jamming effect of the metameric pattern is improved over a wider range of image capture devices, then providing a more effective anti-camcorder effect.

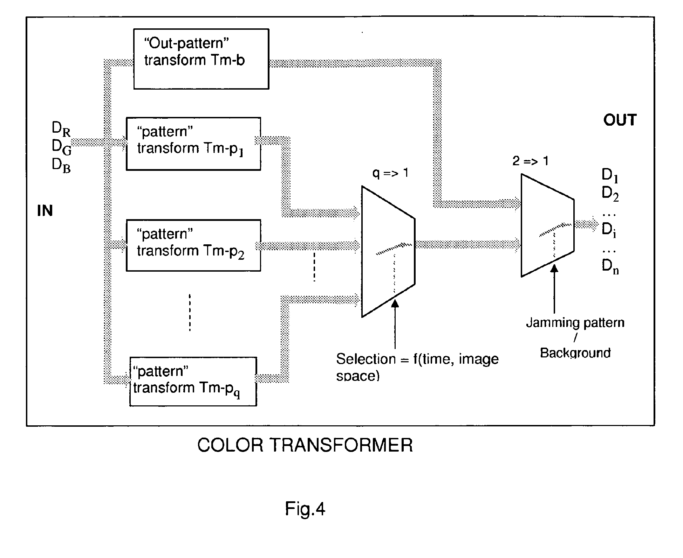

The color transforming step above is implemented by a color transformer, for instance as illustrated on figure 4 where there is only a selection of "pattern" color display transform.

If each "pattern" color display transform of the plurality is different from the "background" color display transform, it does not mean that any first set of three color components $D_R$, $D_G$, $D_B$ may always be transformed into two different second sets of n color components $D_1$, $D_2$, ..., $D_i$, ..., $D_n$ and $D'_1$, $D'_2$, ..., $D'_i$, ..., $D'_n$ (one second set obtained by a "pattern" color display transform of the plurality, and the other second set obtained by another "pattern" color display transform of the plurality). As a matter of fact, there are generally some colors which cannot be metamerized, according to the characteristics of the n primary colors $P_1$, $P_2$, ..., $P_i$, ..., $P_n$, of the color display device. For such a non-metamerizable color represented by a set of three linear color components $D_R$, $D_G$, $D_B$, the second set of n linear color components which is obtained by the "background" color display transform and the second set of n linear color components which is obtained by the "pattern" color display transform will be identical.

Background and pattern color transforms may be of any kind of operators, all Look-Up Tables (LUT), algebraical operators, or even matrices, notably when both first sets and second sets of color components are expressed in a linear color space, as a device-dependent RGB color space.

The shape and/or the location of the pattern may change during the display of images ; this pattern may move with an object of the scene represented by the series, may be an object of this scene. This pattern may be distributed on different locations of the images. This pattern may be a text, as, for instance, "illegal copy" or any annoying text, in one or several languages.

The dynamic change of selection may be performed according to time and/or according to the image space.

In the first case, wherein said images are grouped into groups of successive images, said dynamic change of selection(s) is performed during the display of images each time the displayed image belongs to another group. If each group comprises only one image, the selection is changed for each image. Each group may comprise tens or hundreds of images. Each group may comprise all the successive images of a scene, and the selection will then changed for each scene.

In the second case :

- each pattern being subdivided into a plurality of pattern subparts, the colors representing the pixels of different pattern subparts are color transformed by applying different pattern color display transforms

- and/or said background being subdivided into a plurality of background subparts, the colors representing the pixels of different background subparts are color transformed by applying different background color display transforms.

The color display device is preferably a color projection device. The n primary colors, of the color display device can be advantageously defined to optimize the jamming effect for different classes of camcorders as follows.

Preferably :

- each "pattern" color display transform being paired with at least one "background" color display transform such that each pair of "pattern" color display transform $Tm-p_j$ and "background" color display transform $Tm-b_k$ is associated with a given class of image capture devices which is characterized by a specific spectral response,

    then, the "pattern" color display transform $Tm-p_j$ and the "background" color display transform $Tm-b_k$ of each pair associated with its class is defined such that a maximum is get for the color difference between :

- the color X, Y, Z as perceived by a human eye monitoring a color represented by a set of color components $C_R$, $C_G$, $C_B$ responsive for the capture by an image capture device of said class of a color displayed by said color image display device when controlled by a set of n linear color components $D_1$, $D_2$, ..., $D_i$, ..., $D_n$ obtained by applying said "pattern" color display transform $Tm\text{-}p_j$ to an optimization set of three linear color components $D_R$, $D_G$, $D_B$ representing the color to display, and

- the color X', Y', Z' as perceived by a human eye monitoring a color represented by another set of color components $C'_R$, $C'_G$, $C'_B$ responsive for the capture of a color displayed by said color image display device when controlled by another set of n linear color components $D'_1$, $D'_2$, ..., $D'_i$, ..., $D'_n$, obtained by applying said "background" color display transform $Tm\text{-}b_k$ to the same optimization set of three linear color components $D_R$, $D_G$, $D_B$ representing the same color to display.

The invention allows advantageously the optimization of the jamming of images for a plurality of classes of image capture devices having different spectral sensitivities.

The specific spectral response of a class of image capture devices may be characterized by a forward capture color transform Tc-f that transforms any spectrum $C(\lambda)$ representing a color to capture into a set of color components $C_R$, $C_G$, $C_B$ responsive for the capture of said color using an image capture device of said class.

Preferably, said optimization set of three linear color components $D_R$, $D_G$, $D_B$ represents a color having a white hue.

Preferably, said color difference is expressed and maximized in a perceptually-uniform visual color space, as the CIELAB.

Preferably, said monitoring is performed using a color monitor device. More precisely, this color monitor device may be characterized by a forward capture color transform Tm-f that transforms any set of color components $C_R$, $C_G$, $C_B$ responsive for a color capture device of said class into a set of visual color components X, Y, Z representing said color in a visual color space as displayed by said color monitor device then perceived by the human eye.

Brief description of drawings :

The invention will be more clearly understood on reading the .description which follows, given by way of non-limiting example and with reference to the appended figures in which:

- Figure 1 shows the spectral response of a camcorder OPTURA model from CANON, exemplifying a first class of image capture device;
- Figure 2 shows the spectral response of a camcorder VPD 351 model from SAMSUNG, exemplifying a second class of image capture device;
- Figure 3 shows a video system illustrating an embodiment of the invention;
- Figure 4 illustrates an example of working diagram of a color transformer, of a type that may be used in the video system of figure 3.

Description of embodiments :

It will be appreciated by those skilled in the art that the block diagrams presented herein represent conceptual views of illustrative circuitry embodying the present principles.

The functions of the various elements shown in the figures, notably of the color transformer, may be provided through the use of dedicated hardware as well as hardware capable of executing software in association with appropriate software.

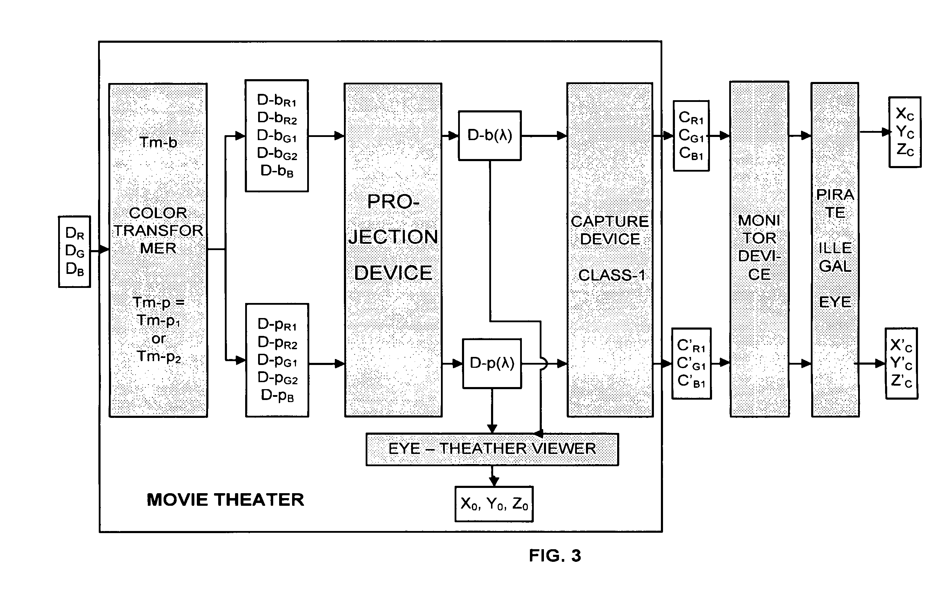

In reference to figure 3, the invention will now be explained in the frame of a video system comprising :

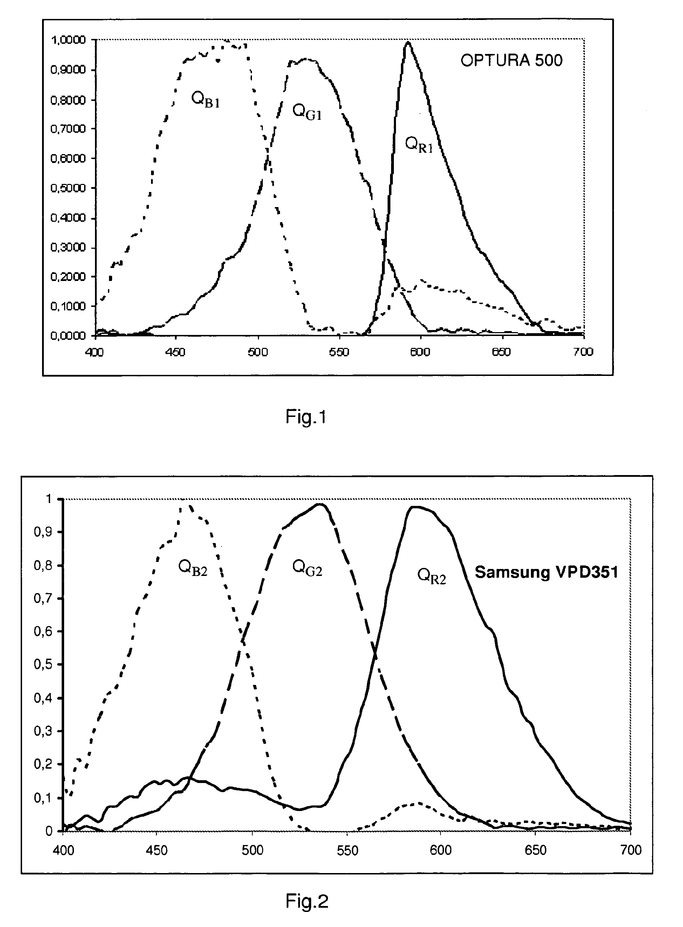

- a color transformer,
- an image projection device having five primary colors $P_{R1}$ $P_{R2}$, $P_{G1}$. $P_{G2}$, $P_B$, adapted to display images $I_D$ on a projection screen for legal viewers;
- an image capture device of a first_class and an image capture device of a second class (not illustrated on figure 3) is placed in front of the same projection screen in order to capture images displayed on this projection screen; a class of image capture device is defined as grouping image capture devices having similar spectral responses; the first class and the second class have different spectral responses as illustrated respectively on figure 1 and 2;
- an image monitor device adapted to display images $I_C$ as captured by one and/or the other of the image capture devices. This image monitor device is a classical display device with only three primaries, which is adapted in a manner known per se to render the images as captured by the image capture devices.

The image projection device is characterized by a forward display color transform Td-f that transform any set of five color components $D_{R1}$, $D_{R2}$, $D_{G1}$, $D_{G2}$, $D_B$ representing the color that would be displayed if they are inputted into the image projection device to control respectively its five primary colors $P_{R1}$, $P_{R2}$, $P_{G1}$, $P_{G2}$, $P_B$ into a spectrum $D(\lambda)$ representing this color as displayed by the image projection device.

The "human eye" is characterized by a forward color visual perception transform Th-f that transform any spectrum $D(\lambda)$ representing a color to perceive by this human eye into a set of three visual linear color components $X_0$, $Y_0$, $Z_0$ representing this color as perceived in the CIEXYZ linear visual color space. Other representation of the visual perception may advantageously used instead of the CIEXYZ, as the LMS color space that fit better the spectral response of the human eye.

The image capture device of a first class is characterized by a first forward capture color transform Tc1-f that transform any spectrum $D(\lambda)$ representing a color to capture into a set of three color components $C_{R1}$, $C_{G1}$, $C_{B1}$ representing, in a given standard format, the captured color as outputted by this image capture device of this first class through its three output primary channels. Figure 1 illustrates the spectral response of each of the three primary channels $Q_{R1}$, $Q_{G1}$, $Q_{B1}$ of this first class of image capture device, as exemplified by a camcorder OPTURA model from CANON.

The image capture device of a second class is characterized by a second forward capture color transform Tc2-f that transform any spectrum $C(\lambda)$ representing, in the same given standard format, a color to capture into a set of three color components $C_{R2}$, $C_{G2}$, $C_{B2}$ representing the captured color as outputted by this image capture device of this second class through its three output primary channels. Figure 2 illustrates the spectral response of each of the three primary channels $Q_{R2}$, $Q_{G2}$, $Q_{B2}$ of this second class of image capture device, as exemplified by the VPD 351 model from SAMSUNG.

The image monitor device is characterized by a forward display color transform Td'-f that transform any set of three linear color components $C_R$, $C_G$, $C_B$ representing, in the same given standard format, a color that would be displayed if they are inputted into this image monitor device into a set of three linear visual color components $X_C$, $Y_C$, $Z_C$ representing this color in the linear visual CIEXYZ color space, as displayed by this image monitor device. A color represented by a set of three color components $C_R$, $C_G$, $C_B$ is then perceived by a human observer as the color represented by the set of three visual color components $X_C$, $Y_C$, $Z_C$.

Each pixel of the images $I_D$ to be displayed is assigned to a color represented in a linear device-dependant RGB color space by a first set of three color components $D_R$, $D_G$, $D_B$. This linear device-dependant RGB color space is for instance derived as described above from the ITU-R BT.709 standard (former CCIR 709). In order to display the images $I_D$, sets of three color components $D_R$, $D_G$, $D_B$ representing the colors of pixels of these images are sent to the image display device.

In order to generate a jamming pattern adapted to prevent the illegal capture of images by the image capture device, before entering the image display device, a pattern is inserted in each image to display by a pattern generator and a pattern inserter. The generation and insertion of such patterns is well known in the art, as notably disclosed in EP1414250 already quoted (SONY), as in EP1592243 and EP2009918 (THOMSON).

Before being inputted into the image display device, the sets of three color components $D_R$, $D_G$, $D_B$ are transformed through the color transformer into sets of five color components $D_{R1}$, $D_{R2}$, $D_{G1}$, $D_{G2}$, $D_B$ that are adapted to control the five primary colors $P_{R1}$, $P_{R2}$, $P_{G1}$, $P_{G2}$, $P_B$ of the image projection device in order to display the colors of pixels of these images.

In order to generate a metameric effect emphasizing the pattern in illegally captured images when displayed on the image monitor device, such a transformation requires specific color display transforms that are different according to the location of the pixel inside or outside the pattern, as disclosed in the already quoted prior art documents. According to the present embodiment of the invention, only one so-called color display transform Tm-b is available for pixels of the background, i.e. not belonging to the pattern, and a plurality of two "pattern" color display transforms Tm-$p_1$, Tm-$p_2$ is available for pixels of the pattern. Both Tm-$p_1$, Tm-$p_2$ are different from Tm-b.

All these transforms Tm-b, Tm-$p_1$, Tm-$p_2$ meet the following metameric requirement, which will now be detailed, still in reference to figure 3.

Any first set of color components $D_R$, $D_G$, $D_B$ representing a color to display assigned to a pixel belonging to the background, after being transformed into a second set of five color components $(D\text{-}b_{R1]}, D\text{-}b_{R2}, D\text{-}b_{G1}, D\text{-}b_{G2}, D\text{-}b_B)$ = Tm-b $(D_R, D_G, D_B)$ using the background color display transform Tm-b, is finally displayed according to a spectrum $D\text{-}b(\lambda)$ that may be calculated according to the following equation : $D\text{-}b(\lambda) = $ Td-f * Tm-b $(D_R, D_G, D_B)$.

The same set of color components $D_R$, $D_G$, $D_B$ representing the same color to display but assigned to another pixel belonging to the pattern, after being transformed into a second set of five color components $(D\text{-}p1_{R1}, D\text{-}p1_{R2}, D\text{-}p1_{G1}, D\text{-}p1_{G2}, D\text{-}p1_B)$ = Tm-$p_1$ $(D_R, D_G, D_B)$ using the first pattern color display transform Tm-$p_1$ (or any as Tm-p on figure 3) is finally displayed according to a spectrum $D\text{-}p_1(\lambda)$ ($D\text{-}p(\lambda)$ on figure 3) that may be calculated according to the following equation : $D\text{-}p_1(\lambda) = $ Td-f * Tm-$p_1$ $(D_R, D_G, D_B)$.

Still the same set of color components $D_R$, $D_G$, $D_B$ representing the same color to display but assigned to still another pixel also belonging to the pattern, after being transformed into a second set of five color components $(D\text{-}p2_{R1}, D\text{-}p2_{R2}, D\text{-}p2_{G1}, D\text{-}p2_{G2}, D\text{-}p2_B)$ = TM-$P_2$ $(D_R, D_G, D_B)$ using the second pattern color display transform Tm-$p_2$, is finally displayed according to a spectrum $D\text{-}p_2(\lambda)$ that may be calculated according to the following equation : $D\text{-}p_2(\lambda) = $ Td-f

* Tm-p$_2$ (D$_R$, D$_G$, D$_B$).

Finally, although the three color transforms Tm-b, Tm-p$_1$, Tm-p$_2$ are different each from another leading to different sets of five color components (D-b$_{R1}$, D-b$_{R2}$, D-b$_{G1}$, D-b$_{G2}$, D-b$_B$), (D-p1$_{R1}$, D-p1$_{R2}$, D-p1$_{G1}$, D-p1$_{G2}$, D-p1$_B$), (D-p2$_{R1}$, D-p2$_{R2}$, D-p2$_{G1}$, D-p2$_{G2}$, D-p2$_B$) from the same first set of color components (D$_R$, D$_G$, D$_B$), the three displayed colors have different spectrums but should be perceived by an human observer as the same visual color, that according to a simplified and approximate model of visual metamerism, is represented by X$_0$, Y$_0$, Z$_0$ in the CIEXYZ color space. This metameric requirement can be expressed according to the following equation :

$$\text{Th-f(D-b}(\lambda)) = \text{Th-f(D-p}_1(\lambda)) = \text{Th-f(D-p}_2(\lambda)),$$

or, whatever is the first set of color components D$_R$, D$_G$, D$_B$ :

$$\text{Th-f * Td-f * Tm-b (D}_R, D_G, D_B) = \text{Th-f * Td-f * Tm-p}_1 (D_R, D_G, D_B) = \text{Th-f * Td-f *}$$
$$\text{Tm-p}_2 (D_R, D_G, D_B).$$

It means that the different sets of five color components are metameric in the Human Visual System (HVS). Other definition of visual metamerism may be used without departing from the invention, as using variations of the CIEXYZ color space based on the CIE 170-1:2006, taking in account the variations of the human eye spectral sensitivities according to, notably, the viewing angle and the age.

Out of the metameric requirement, according to the invention, these transforms Tm-b, Tm-p$_1$, Tm-p$_2$ meet optimized jamming requirements as follows.

The first pattern color display transform Tm-p$_1$ is adapted to make the patterns the most perceptually visible on the background colors that are transformed using the background color display transform Tm-b, when the displayed images are captured by an image capture device of the first class, i.e. by an image capture device characterized by a forward capture color transform Tc1-f. Such an adaptation is preferably performed as follows.

A white (or "grey") color represented by a first set of white linear color components DW$_R$, DW$_G$, DW$_B$ in the RGB color space is chosen. This first set may for instance correspond to the D65 standard illuminant (x=0.3129 y=0.3297 in the ClExyY color space) or to the so-called equi-energy white (x=0,333 y=0.333 in the ClExyY color space). Using the background color display transform Tm-b, displaying this white color, i.e. applying the forward display color transform Td-f of the image projection device, capturing this displayed white color using the image capture device of the first class, i.e. applying the forward capture color transform Tc1-f of this image capture device, and monitoring this captured color, i.e. applying the forward display color transform Td'-f of the image monitor device would lead to a set of three linear visual color components XW$_{C1}$, YW$_{C1}$, ZW$_{C1}$ representing the captured and monitored color in the linear CIEXYZ color space. Therefore, this set of three linear visual color components is obtained according to the following equation :

$$(XW_{C1}, YW_{C1}, ZW_{C1}) = \text{Td'-f * Tc1-f * Td-f * Tm-b (DW}_R, DW_G, DW_B)$$

Applying the same process to the same white color but using the first pattern color display transform Tm-p$_1$ instead of the background color display transform Tm-b, leads to another set of three linear visual color components according to the following equation :

$$(XW'_{C1}, YW'_{C1}, ZW'_{C1}) = \text{Td'-f * Tc1-f * Td-f * Tm-p}_1 (DW_R, DW_G, DW_B)$$

Such a white color assigned to a pixel located outside the pattern, after being displayed and captured will be perceived by a human observer on the image monitor device as the color represented in the CIEXYZ color space by the set of three linear visual color components XW$_{C1}$, YW$_{C1}$, ZW$_{C1}$. Such a white color assigned to a pixel located inside the pattern, after being displayed and captured will be perceived by a human observer on the image monitor device as the color represented in the CIEXYZ color space by the set of three linear visual color components X'W$_{C1}$, Y'W$_{C1}$, Z'W$_{C1}$,

Each set of three linear visual color components X, Y, Z representing the perceived color in the CIEXYZ color space may be represented by a corresponding set of three perceptually-uniform visual color components L*, a*, b* in the CIELAB perceptually-uniform color space, by using the following equations :

$$L^* = 116 * \left(\frac{Y}{Yn}\right)^{1/3} - 16,$$

$$a^* = 500 * \left[\left(\frac{X}{Xn}\right)^{1/3} - \left(\frac{Y}{Yn}\right)^{1/3}\right], \quad b^* = 200 * \left[\left(\frac{Y}{Yn}\right)^{1/3} - \left(\frac{Z}{Zn}\right)^{1/3}\right]$$

An advantage of the CIELAB color space is to be perceptually uniform, then allowing calculating Euclidian distances between perceived colors.

Using the above equations, the set of three linear visual color components $XWC1$, $YW_{C1}$, $ZW_{C1}$ is transformed into a corresponding set of three perceptually-uniform visual color components $L^*W_{C1}$, $a^*W_{C1}$, $b^*W_{C1}$, and the set of three linear visual color components $XW'_{C1}$, $YW'_{C1}$, $ZW'_{C1}$ is transformed into a corresponding set of three perceptually-uniform visual color components $L^*W'_{C1}$, $a^*W'_{C1}$, $b^*W'_{C1}$.

According to the invention, the pattern color transform $Tm\text{-}p_1$ is defined such that a color difference $\triangle E$ between the two perceived colors is maximum, wherein

$$\Delta E_1^* = \sqrt{\left(L^*W_{C1} - L^*W'_{C1}\right)^2 + \left(a^*W_{C1} - a^*W'_{C1}\right)^2 + \left(b^*W_{C1} - b^*W'_{C1}\right)^2} \quad .$$ Preferably, the spectrums

of the five primary colors $P_{R1}$, $P_{R2}$, $P_{G1}$, $P_{G2}$, $P_B$, of the image projection device are adapted to meet this first maximum requirement.

Similarly, the second pattern color display transform $Tm\text{-}p_2$ is adapted to make the patterns the most perceptually visible on the background colors that are transformed using the background color display transform $Tm\text{-}b$, when the displayed images are captured by an image capture device of the second class, i.e. characterized by a forward capture color transform $Tc2\text{-}f$. From a set of three linear visual color components $(XW_{C2}, YW_{C2}, ZW_{C2}) = Td'\text{-}f * Tc2\text{-}f * Td\text{-}f * Tm\text{-}b\, (DW_R, DW_G, DW_B)$ for the background, and another set of three linear visual color components $(XW'_{C2}, YW'_{C2}, ZW'_{C2}) = Td'\text{-}f * Tc2\text{-}f * Td\text{-}f * Tm\text{-}p_2\, (DW_R, DW_G, DW_B)$ for the pattern, the pattern color transform $Tm\text{-}p_2$ is defined such that a color difference $\Delta E$ between the two other perceived colors is maximum, wherein

$$\Delta E_2^* = \sqrt{\left(L^*W_{C2} - L^*W'_{C2}\right)^2 + \left(a^*W_{C2} - a^*W'_{C2}\right)^2 + \left(b^*W_{C2} - b^*W'_{C2}\right)^2} \quad .$$

Preferably, the spectrums of the five primary colors $P_{R1}$, $P_{R2}$, $P_{G1}$, $P_{G2}$, $P_B$, of the image projection device are further adapted to meet this second maximum requirement.

Having now defined the transforms $Tm\text{-}b$, $Tm\text{-}p_1$, $Tm\text{-}p_2$ according to metameric requirements and to the optimized jamming requirements, the first embodiment of the method for displaying a series of images is now implemented according to the following steps :

- inserting a pattern in each image of the series,
- for any image of the series, the first sets of three linear color components $D_R$, $D_G$, $D_B$ representing the colors assigned to pixels that are located outside the pattern are transformed into second sets of five color components $D\text{-}b_{R1}$, $D\text{-}b_{R2}$, $D\text{-}b_{G1}$, $D\text{-}b_{G2}$, $D\text{-}b_B$ using the background color transform $Tm\text{-}b$.
- for even images of the series, the first sets of three linear color components $D_R$, $D_G$, $D_B$ representing the colors assigned to pixels that are located inside the pattern are transformed into second sets of five color components $D'\text{-}p1_{R1}$, $D'\text{-}p1_{R2}$, $D'\text{-}p1_{G1}$, $D'\text{-}p1_{G2}$, $D'\text{-}p1_B$ using the first pattern color transform $Tm\text{-}p_1$.
- for odd images of the series, the first sets of three linear color components $D_R$, $D_G$, $D_B$ representing the colors assigned to pixels that are located inside the pattern are transformed into second sets of five color components $D'\text{-}p2_{R1}$, $D'\text{-}p2_{R2}$, $D'\text{-}p2_{G1}$, $D'\text{-}p2_{G2}$, $D'\text{-}p2_B$ using the second pattern color transform $Tm\text{-}p_2$.
- displaying each pixel of images of the series by using the second set of five linear color components representing the colors assigned to these pixels, to control respectively each of the five basic primary colors $P_{R1}$, $P_{R2}$, $P_{G1}$, $P_{G2}$, $P_B$ of the color projection device.

According to this first embodiment, the selection of the pattern color transform which is used to represent the colors assigned to pixels located inside the pattern is changed dynamically in time : alternatively, the first pattern color transform Tm-p$_1$ and the second pattern color transform Tm-p$_2$ are used. According to a variant, the time base (even/odd) according to which the first and the second pattern color transforms are used may be advantageously slower : for instance, the pattern color transform is changed for each new hundreds of image, instead of being changed for each new image (even/odd).

More generally, if the images to display are grouped into groups of successive images (for instance, even and odd groups, or groups of hundred successive images as above), there is a dynamic change of selection(s) of pattern color transforms during the display of images each time the displayed image belongs to another group.

During the display of the images, thanks to the invention, the pattern will jam efficiently the capture of displayed images both for image capture devices of the first class and for image capture devices of the second class.

Based on the same transforms Tm-b, Tm-p$_1$, Tm-p$_2$ defined according to metameric requirements and to optimized jamming requirements, a second embodiment of the method for displaying a series of images may be implemented according to the following steps :

- inserting a pattern in each image of the series, wherein each pattern J is subdivided into two subparts J1 and J2;
- as in the first embodiment, for any image of the series, the first sets of three linear color components D$_R$, D$_G$, D$_B$ representing the colors assigned to pixels that are located outside the pattern J are transformed into second sets of five color components D-b$_{R1}$, D-b$_{R2}$, D-b$_{G1}$, D-b$_{G2}$, D-b$_B$ using the background color transform Tm-b.
- for any image of the series, the first sets of three linear color components D$_R$, D$_G$, D$_B$ representing the colors assigned to pixels that are located inside the first subpart J1 of the pattern J are transformed into second sets of five color components D'-p1$_{R1}$, D'-p1$_{R2}$, D'-p1$_{G1}$, D'-p1$_{G2}$, D'-p1$_B$ using the first pattern color transform Tm-p$_1$.
- for any images of the series, the first sets of three linear color components D$_R$, D$_G$, D$_B$ representing the colors assigned to pixels that are located inside the second subpart J2 of the pattern J are transformed into second sets of five color components D'-p2$_{R1}$, D'-p2$_{R2}$, D'-p2$_{G1}$, D'-p2$_{G2}$, D'-p2$_B$ using the second pattern color transform Tm-p$_2$.
- as in the first embodiment, displaying each pixel of images of the series by using the second set of five linear color components representing the colors assigned to these pixels, to control respectively each of the five basic primary colors P$_{R1}$, P$_{R2}$, P$_{G1}$. P$_{G2}$, P$_B$ of the color projection device.

According to this second embodiment, the selection of the pattern color transform which is used to represent the colors assigned to pixels located inside the pattern is changed within each image, i.e. is changed dynamically in space : the first pattern color transform Tm-p$_1$ is used for pixels inside first subpart of this pattern and the second pattern color transform Tm-p$_2$ is used for pixels inside second subpart of this pattern. Alternatively, instead of changing within each image of the series, the change may be done only within each image at least a group of successive images, each group being only a portion of the whole series of images.

More generally, if each pattern is subdivided into a plurality of pattern subparts, the colors representing the pixels of different pattern subparts are color transformed by applying different pattern color display transforms.

Alternatively or simultaneously, there is a plurality of background color display transforms and a selection step over this plurality, the background of each image may be subdivided into a plurality of background subparts, and the colors representing the pixels of different background subparts are color transformed by applying different background color display transforms.

During the display of the images, thanks to the invention, the pattern will jam efficiently the capture of displayed images both for image capture devices of the first class and for image capture devices of the second class.

The dynamic change of selection(s) may be performed both during the display of images of the series and within images of said series; for instance, if the series is divided into groups of successive images, within some groups the dynamic change of selection is performed during the display of images, while within some other groups the dynamic change of selection is performed within images of said groups.

These and other features and advantages of the present principles may be readily ascertained by one of ordinary skill in the pertinent art based on the teachings herein. It is to be understood that the teachings of the present principles may be implemented in various forms of hardware, software, firmware, or combinations thereof.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method for displaying a series of images by controlling n primary colors $P_1$, $P_2$, ..., $P_i$, ..., $P_n$, of a color display device, wherein n > 3, comprising the following steps:

   - inserting a pattern in each image of said series,
   - for each pixel of said images assigned with a first set of three color components $D_R$, $D_G$, $D_B$ representing the color of said pixel, color transforming said first set of three linear color components $D_R$, $D_G$, $D_B$ into a second set of n linear color components $D_1$, $D_2$, ..., $D_i$, ..., $D_n$ adapted to control respectively the n primary colors $P_1$, $P_2$, ..., $P_i$, ..., $P_n$ in order to display said color, said color transforming being obtained by applying a so-called "background" color display transform $Tm\text{-}b_k$ if said pixel of an image is located outside of the pattern inserted in said image, said color transforming being obtained by applying a so-called "pattern" color display transform $Tm\text{-}p_j$ different from the "background" color display transform $Tm\text{-}b_k$ if said pixel of an image is located inside the pattern inserted in said image,
   - displaying each pixel of said images by controlling the n primary colors $P_1$, $P_2$, ..., $P_i$, ..., $P_n$, with the second set of n linear color components $D_1$, $D_2$, ..., $D_i$, ..., $D_n$ obtained by said color transformation of the first set of three color components $D_R$, $D_G$, $D_B$ representing the color of said pixel,
   wherein the color that is displayed when using any second set of n linear color components $D_1$, $D_2$, ..., $D_j$, ..., $D_n$ that is obtained by applying the "background" color display transform to a first set of three color components $D_R$, $D_G$, $D_B$ is approximately metameric for the Human Visual System (HVS) with the color that is displayed when using any second set of n linear color components $D'_1$, $D'_2$, ..., $D'_j$, ..., $D'_n$ that is obtained by applying the "pattern" color display transform to the same first set of three color components $D_R$, $D_G$, $D_B$,
   wherein said method comprises also one or both following selecting steps :
   - selecting, among a plurality $Tm\text{-}p_1$, $Tm\text{-}p_2$, ..., $Tm\text{-}p_j$, ..., $Tm\text{-}p_q$ of different "pattern" color display transforms, said "pattern" color display transform to be applied to transform a first set of three linear color components $D_R$, $D_G$, $D_B$ assigned to a pixel of an image which is located inside the pattern inserted in said image;
   - selecting, among a plurality $Tm\text{-}b_1$, $Tm\text{-}b_2$, ..., $Tm\text{-}b_k$, ..., $Tm\text{-}b_r$ of different "background" color display transforms, said "background" color display transform to be applied to transform a first set of three linear color components $D_R$, $D_G$, $D_B$ assigned to a pixel of an image which is located outside the pattern inserted in said image ;
   and wherein said method comprises also changing dynamically said one or more selections during the display of images of said series and/or within images of said series,
   **characterized in that**,
   each "pattern" color display transform being paired with at least one "background" color display transform such that each pair of "pattern" color display transform $Tm\text{-}p_j$ and "background" color display transform $Tm\text{-}b_k$ is associated with a given class of image capture devices which is **characterized by** a specific spectral response, then, the "pattern" color display transform $Tm\text{-}p_j$ and the "background" color display transform $Tm\text{-}b_k$ of each pair associated with its class is defined such that a maximum is get for the color difference between :
   - the color X, Y, Z as perceived by a human eye monitoring a color represented by a set of color components $C_R$, $C_G$, $C_B$ responsive for the capture by an image capture device of said class of a color displayed by said color image display device when controlled by a set of n linear color components $D_1$, $D_2$, ..., $D_i$, ..., $D_n$ obtained by applying said "pattern" color display transform $Tm\text{-}p_j$ to an optimization set of three linear color components $D_R$, $D_G$, $D_B$ representing the color to display, and
   - the color X', Y', Z' as perceived by a human eye monitoring a color represented by another set of color components $C'_R$, $C'_G$, $C'_B$ responsive for the capture of a color displayed by said color image display device when controlled by another set of n linear color components $D'_1$, $D'_2$, ..., $D'_i$, ..., $D'_n$ obtained by applying said "background" color display transform $Tm\text{-}b_k$ to the same optimization set of three linear color components $D_R$, $D_G$, $D_B$ representing the same color to display.

2. Method for displaying a series of images according to claim 1, wherein said images are grouped into groups of successive images, **characterized in that** said dynamic change of one or more selections is performed during the display of images each time the displayed image belongs to another group.

3. Method for displaying a series of images according to claim 1 or 2, wherein :

   - each pattern being subdivided into a plurality of pattern subparts, the colors representing the pixels of different pattern subparts are color transformed by applying different pattern color display transforms
   - and/or said background being subdivided into a plurality of background subparts, the colors representing the pixels of different background subparts are color transformed by applying different background color display transforms.

4. Display method according to any one of the preceding claims **characterized in that** said optimization set of three linear color components $D_R$, $D_G$, $D_B$ represents a color having a white hue.

5. Display method according to any one of preceding claims **characterized in that** said color difference is expressed and maximized in a perceptually-uniform visual color space.

6. Display method according to any one of claims 1 to 5 **characterized in that** said monitoring is performed using a color monitor device.

**Patentansprüche**

1. Verfahren zum Anzeigen einer Reihe von Bildern durch Steuern von n Grundfarben $P_1$, $P_2$, ..., $P_i$, ..., $P_n$ einer Farbanzeigevorrichtung, wobei n > 3 ist, wobei das Verfahren die folgenden Schritte umfasst:

- Einfügen eines Musters in jedes Bild der Reihe,
- für jedes Pixel der Bilder, dem ein erster Satz von drei Farbkomponenten $D_R$, $D_G$, $D_B$ zugewiesen ist, die die Farbe des Pixels repräsentieren, Farbtransformieren des ersten Satzes vorn drei linearen Farbkomponenten $D_R$, $D_G$, $D_B$ in einen zweiten Satz vorn n linearen Farbkomponenten $D_1$, $D_2$, ..., $D_i$, ..., $D_n$, die in dieser Reihenfolge zum Steuern der n Grundfarben $P_1$, $P_2$, ..., $P_i$, ..., $P_n$ ausgelegt sind, um die Farbe anzuzeigen, wobei das Farbtransformieren durch Anwenden einer sogenannten "Hintergrund"-Farbanzeigetransformation $Tm\text{-}b_k$ erhalten wird, wenn sich das Pixel eines Bilds außerhalb des in das Bild eingefügten Musters befindet, wobei das Farbtransformieren durch Anwenden einer sogenannten "Muster"-Farbanzeigetransformation $Tm\text{-}p_j$ erhalten wird, die sich von der "Hintergrund"-Farbanzeigetransformation $Tm\text{-}b_k$ unterscheidet, wenn sich das Pixel eines Bilds innerhalb des in das Bild eingefügten Musters befindet,
- Anzeigen jedes Pixels des Bilds durch Steuern der n Grundfarben $P_1$, $P_2$, ..., $P_i$, ..., $P_n$ mit einem zweiten Satz von n linearen Farbkomponenten $D_1$, $D_2$, ..., $D_i$, ..., $D_n$, der durch die Farbtransformation des ersten Satzes von drei Farbkomponenten $D_R$, $D_G$, $D_B$, die die Farbe des Pixels repräsentieren, erhalten wird,
wobei die Farbe, die angezeigt wird, wenn irgendein zweiter Satz von n linearen Farbkomponenten $D_1$, $D_2$, ..., $D_i$, ..., $D_n$ verwendet wird, der durch Anwenden der "Hintergrund"-Farbanzeigetransformation auf einen ersten Satz von drei Farbkomponenten $D_R$, $D_G$, $D_B$ erhalten wird, für das menschliche Sehsystem (HVS) näherungsweise metamer mit der Farbe ist, die angezeigt wird, wenn irgendein zweiter Satz von n linearen Farbkomponenten $D'_1$, $D'_2$, ..., $D'_i$, ..., $D'_n$ verwendet wird, der durch Anwenden der "Muster"-Farbanzeigetransformation auf denselben ersten Satz von drei Farbkomponenten $D_R$, $D_G$, $D_B$ erhalten wird,
wobei das Verfahren außerdem einen oder beide der folgenden Auswahlschritte umfasst:
- Auszählen aus einer Mehrzahl $Tm\text{-}p_1$, $Tm\text{-}p_2$, ..., $Tm\text{-}p_j$, ..., $Tm\text{-}p_q$ unterschiedlicher "Muster"-Farbanzeigetransformationen derjenigen "Muster"-Farbanzeigetransformationen, die zum Transformieren eines ersten Satzes von drei linearen Farbkomponenten $D_R$, $D_G$, $D_B$, die einem Pixel eines Bilds zugewiesen sind, das sich innerhalb des in das Bild eingefügten Musters befindet, abzuwenden ist;
- Auszählen aus einer Mehrzahl $Tm\text{-}b_1$, $Tm\text{-}b_2$, ..., $Tm\text{-}b_k$, ..., $Tm\text{-}b_r$ unterschiedlicher "Hintergrund"-Farbanzeigetransformationen derjenigen "Hintergrund"-Farbanzeigetransformationen, die auf eine Transformation eines ersten Satzes von drei linearen Farbkomponenten $D_R$, $D_G$, $D_B$, die einem Pixel eines Bilds zugewiesen sind, das sich außerhalb des in das Bild eingefügten Musters befindet, abzuwenden ist; und wobei das Verfahren außerdem das dynamische Ändern der einen oder mehreren Auszählen während der Anzeige von Bildern der Reihe und/oder innerhalb von Bildern der Reihe umfasst,
**dadurch gekennzeichnet, dass**
jede "Muster"-Farbanzeigetransformation mit mindestens einer "Hintergrund"-Farbanzeigetransformation in der Weise gepaart wird, dass jedes Paar einer "Muster"-Farbanzeigetransformation $Tm\text{-}p_j$ und einer "Hintergrund"-Farbanzeigetransformation $Tm\text{-}b_k$ einer gegebenen Klasse von Bildaufnahmevorrichtungen zugeordnet wird, die durch eine spezifisch spektrale Empfindlichkeit charakterisiert ist, wobei dann die "Muster"-Farbanzeigetransformation $Tm\text{-}p_j$ und die "Hintergrund"-Farbanzeigetransformation $Tm\text{-}b_k$, jedes seiner Klasse zugeordneten Paars in der Weise definiert wird, dass für die Farbdifferenz ein Maximum erhalten wird zwischen:
- der Farbe X, Y, Z, wie sie von einem menschlichen Auge, das eine Farbe überwacht, die durch einen Satz von Farbkomponenten $C_R$, $C_G$, $C_B$ repräsentiert wird, in Reaktion auf die Aufnahme durch eine Bildaufnahmevorrichtung der Klasse einer Farbe, die durch die Farbbildanzeigevorrichtung angezeigt wird, wenn sie durch einen Satz von n linearen Farbkomponenten $D_1$, $D_2$, ..., $D_i$, ..., $D_n$, der durch Anwenden der "Muster"-Farbanzeigetransformation Tm-p$_j$ auf einen Optimierungssatz von drei linearen Farbkomponenten $D_R$, $D_G$, $D_B$ erhalten wird, der die anzuzeigende Farbe repräsentiert, gesteuert wird, wahrgenommen wird, und

- der Farbe X', Y', Z', wie sie von einem menschlichen Auge, das eine Farbe überwacht, die durch einen anderen Satz von Farbkomponenten C'$_R$, C'$_G$, C'$_B$ repräsentiert wird, in Reaktion auf die Aufnahme einer Farbe, die durch die Farbbildanzeigevorrichtung angezeigt wird, wenn sie durch einen anderen Satz von n linearen Farbkomponenten $D'_1$, $D'_2$, ..., $D'_i$, ..., $D'_n$, der durch Anwendet der "Hintergrund"-Farbanzeigetransformation Tm-b$_k$ auf denselben Optimierungssatz von drei linearen Farbkomponenten $D_R$, $D_G$, $D_B$ erhalten wird, der dieselbe anzuzeigende Farbe repräsentiert, gesteuert wird, wahrgenommen wird.

2. Verfahren zum Anzeigen einer Reihe von Bildern nach Anspruch 1, bei dem die Bilder in Gruppen aufeinander folgender Bilder gruppiert werden, **dadurch gekennzeichnet, dass** die dynamische Änderung einer oder mehrerer Auswahlen während der Anzeige von Bildern jedes Mal ausgeführt wird, wenn das angezeigte Bild zu einer anderen Gruppe gehört.

3. Verfahren zum Anzeigen einer Reihe von Bildern nach Anspruch 1 oder 2, bei dem:

- jedes Muster in eine Mehrzahl von Musterteilabschnitten unterteilt wird, wobei diejenigen Farben, die die Pixel unterschiedlicher Musterteilabschnitte repräsentieren, durch Anwenden unterschiedlicher Musterfarbanzeigetransformationen farbtransformiert werden,
- und/oder der Hintergrund in eine Mehrzahl von Hintergrundteilabschnitten unterteilt wird, wobei diejenigen Farben, die die Pixel unterschiedlicher Hintergrundteilabschnitte repräsentieren, durch Anwenden unterschiedlicher Hintergrundfarbanzeigetransformationen farbtransformiert werden.

4. Anzeigeverfahren nach einem der vorhergehenden Ansprüche, **dadurch gekennzeichnet, dass** der Optimierungssatz von drei linearen Farbkomponenten $D_R$, $D_G$, $D_B$ eine Farbe mit einem weißen Farbton repräsentiert.

5. Anzeigeverfahren nach einem der vorhergehenden Ansprüche, **dadurch gekennzeichnet, dass** die Farbdifferenz in einem für die Wahrnehmung gleichförmigen visuellen Farbraum ausgedrückt und maximiert wird.

6. Anzeigeverfahren nach einem der Ansprüche 1 bis 5, **dadurch gekennzeichnet, dass** die Überwachung unter Verwendung einer Farbüberwachungsvorrichtung ausgeführt wird.

**Revendications**

1. Procédé permettant d'afficher une série d'images en contrôlant n couleurs primaires $P_1$, $P_2$, ..., $P_i$,..., $P_n$, d'un dispositif d'affichage couleur, où n > 3, comprenant les étapes suivantes :

- insertion d'un motif dans chaque image de ladite série,
- pour chaque pixel desdites images auquel est associé un premier ensemble de trois composantes couleur $D_R$, $D_G$, $D_B$ représentant la couleur dudit pixel, transformation couleur dudit premier ensemble de trois composantes couleur linéaires $D_R$, $D_G$, $D_B$ en un second ensemble de n composantes couleur linéaires $D_1$, $D_2$, ..., $D_i$,..., $D_n$ adapté pour contrôler respectivement les n couleurs primaires $P_1$, $P_2$, ..., $P_i$,..., $P_n$ afin d'afficher ladite couleur, ladite transformation couleur étant obtenue en appliquant ce qu'il est convenu d'appeler une transformation d'affichage couleur « d'arrière-plan » Tm-b$_k$, si ledit pixel d'une image se situe à l'extérieur du motif inséré dans ladite image, ladite transformation couleur étant obtenue en appliquant ce qu'il est convenu d'appeler une transformation d'affichage couleur de « motif » Tm-p$_j$ différente de la transformation d'affichage couleur « d'arrière-plan » Tm-b$_k$ si ledit pixel d'une image se situe à l'intérieur du motif inséré dans ladite image,
- affichage de chaque pixel desdites images en contrôlant les n couleurs primaires $P_1$, $P_2$, ..., $P_i$,..., $P_n$ avec le second ensemble de n composantes couleur linéaires $D_1$, $D_2$, ..., $D_i$,..., $D_n$ obtenu via ladite transformation couleur du premier ensemble de trois composantes couleur $D_R$, $D_G$, $D_B$ représentant la couleur dudit pixel, où la couleur qui s'affiche lors de l'utilisation d'un quelconque second ensemble de n composantes couleur linéaires $D_1$, $D_2$, ..., $D_i$,..., $D_n$ obtenu en appliquant la transformation d'affichage couleur « d'arrière-plan » à un premier ensemble de trois composants couleur $D_R$, $D_G$, $D_B$ est approximativement métamérique pour le Système Visuel Humain (SVH) avec la couleur qui s'affiche lors de l'utilisation d'un quelconque second ensemble de n composantes couleur linéaires $D'_1$, $D'_2$, ..., $D'_i$, ..., $D'_n$ obtenu en appliquant la transformation d'affichage couleur de « motif » au même premier ensemble de trois composantes couleur $D_R$, $D_G$, $D_B$,

dans lequel ledit procédé comprend également l'une des deux ou les deux étapes de sélection suivantes :

- sélection parmi une pluralité Tm-p$_1$, Tm-p$_2$, ..., Tm-p$_j$, ..., Tm-p$_q$ de différentes transformations d'affichage couleur de « motifs », de ladite transformation d'affichage couleur « motif » à appliquer pour transformer un premier ensemble de trois composantes couleur linéaires D$_R$, D$_G$, D$_B$ attribué à un pixel d'une image qui se situe à l'intérieur du motif inséré dans ladite image ;

- sélection, parmi une pluralité Tm-b$_1$, Tm-b$_2$, ..., Tm-b$_k$, ..., Tm-b$_r$ de différentes transformations d'affichage couleur «d'arrière-plan », de ladite transformation d'affichage couleur « d'arrière-plan » à appliquer pour transformer un premier ensemble de trois composantes couleur linéaires D$_R$, D$_G$, D$_B$ attribué à un pixel d'une image qui se situe à l'extérieur du motif inséré dans ladite image ;

et où ledit procédé comprend également la modification dynamique de ladite ou de plusieurs sélections pendant l'affichage d'images de ladite série et/ou à l'intérieur d'images de ladite série,

**caractérisé en ce que**,

chaque transformation d'affichage couleur de « motif » étant au moins associée à une transformation d'affichage couleur « d'arrière-plan » de sorte que chaque paire de transformation d'affichage couleur de « motif » Tm-p$_j$ et de transformation d'affichage couleur « d'arrière-plan » Tm-b$_k$ soit associée à une classe donnée de dispositifs de capture d'image **caractérisée par** une réponse spectrale spécifique,

la transformation d'affichage couleur de « motif » Tm-p$_j$ et la transformation d'affichage couleur « d'arrière-plan » Tm-b$_k$ de chaque paire associée à sa classe est alors définie de telle sorte qu'une valeur maximale est obtenue pour la différence de couleur entre :

- la couleur X, Y, Z telle qu'elle est perçue par un oeil humain observant une couleur représentée par un ensemble de composantes couleur C$_R$, C$_G$, C$_B$ obtenu par capture par un dispositif de capture d'image de ladite classe d'une couleur affichée par ledit dispositif d'affichage d'image couleur quand il est contrôlé par un ensemble de n composantes couleur linéaires D$_1$, D$_2$, ..., D$_i$, ..., D$_n$ obtenu en appliquant ladite transformation d'affichage couleur de « motif » Tm-p$_j$ à un ensemble d'optimisation de trois composantes couleur linéaires D$_R$, D$_G$, D$_B$ représentant la couleur à afficher, et

- la couleur X', Y', Z' telle qu'elle est perçue par un oeil humain observant une couleur représentée par un autre ensemble de composantes couleur C'$_R$, C'$_G$ C'$_B$ obtenu par capture d'une couleur affichée par ledit dispositif d'affichage d'images couleur quand il est contrôlé par un autre ensemble de n composantes couleur linéaires D'$_1$, D'$_2$, ..., D'$_i$, ...,D'$_n$ obtenu en appliquant ladite transformation d'affichage couleur « d'arrière-plan » Tm-b$_k$ au même ensemble d'optimisation de trois composantes couleur linéaires D$_R$, D$_G$, D$_B$ représentant la même couleur à afficher.

2. Procédé permettant l'affichage d'une série d'images selon la revendication 1, dans lequel lesdites images sont groupées dans des groupes d'images successives, **caractérisé en ce que** ladite modification dynamique d'une ou de plusieurs sélections est réalisée durant l'affichage des images chaque fois que l'image affichée appartient à un autre groupe.

3. Procédé permettant l'affichage d'une série d'images selon la revendication 1 ou 2, dans lequel :

- chaque motif étant subdivisé en une pluralité de sous-parties de motifs, les couleurs représentant les pixels des différentes sous-parties de motifs subissent une transformation couleur en appliquant différentes transformations d'affichage couleur de « motif »

- et/ou ledit arrière-plan étant subdivisé en une pluralité de sous-parties d'arrière-plan, les couleurs représentant les pixels des différentes sous-parties d'arrière-plan subissent une transformation couleur en appliquant différentes transformations d'affichage couleur d'arrière-plan.

4. Procédé d'affichage selon l'une quelconque des revendications précédentes **caractérisé en ce que** ledit ensemble d'optimisation de trois composantes couleur linéaires D$_R$, D$_G$, D$_B$ représente une couleur possédant une teinte blanche.

5. Procédé d'affichage selon l'une quelconque des revendications précédentes **caractérisé en ce que** ladite différence de couleur est exprimée et optimisée dans un espace de couleur visuel de perception uniforme.

6. Procédé selon l'une des revendications 1 à 5 **caractérisé en ce que** ladite observation par l'oeil est réalisée à l'aide d'un dispositif d'affichage couleur.

Fig.1

Fig.2

FIG. 3

"Out-pattern" transform Tm-b

"pattern" transform Tm-p$_1$

"pattern" transform Tm-p$_2$

"pattern" transform Tm-p$_q$

$D_R$
$D_G$
$D_B$

IN

q => 1

2 => 1

OUT

$D_1$
$D_2$
...
$D_i$
...
$D_n$

Selection = f(time, image space)

Jamming pattern / Background

COLOR TRANSFORMER

Fig.4

16

EP 2 249 561 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004040899 A
- US 2004081318 A
- EP 1414250 A
- US 2006H152524 A

- WO 2006076174 A
- EP 1592243 A
- EP 2009918 A, THOMSON